(19) Europäisches Patentamt
European Patent Office
Office européen des brevets

(11) Publication number: **0 169 246**
**A1**

(12) # EUROPEAN PATENT APPLICATION

published in accordance with Art. 158(3) EPC


(21) Application number: 85900746.0

(22) Date of filing: 21.01.85

Data of the international application taken as a basis:

(86) International application number: PCT/JP85/00021

(87) International publication number: WO85/03289 (01.08.85 85/17)

(51) Int. Cl.[4]: C 07 C 69/90
A 01 N 37/40

(30) Priority: 25.01.84 JP 11651/84

(43) Date of publication of application: 29.01.86 Bulletin 86/5

(84) Designated Contracting States: BE CH DE FR GB LI NL SE



(71) Applicant: Yoshitomi Pharmaceutical Industries, Ltd.
35 Hiranomachi 3-chome Higashi-ku
Osaka-shi Osaka 541(JP)

(72) Inventor: AKASHI, Hiroyuki
641, Shimotobaru
Taiheimura, Chikujo-gun Fukuoka 871-09(JP)

(72) Inventor: HANAYAMA, Naoki
3-21, Okidaimachi 2-chome
Nakatsu-shi Oita 871(JP)

(72) Inventor: SATO, Toshio
116-16, Shimomiyanaga 1-chome
Nakatsu-shi Oita 871(JP)

(72) Inventor: TAKAHASHI, Hideo
515-22, Shimomiyanaga
Nakatsu-shi Oita 871(JP)

(74) Representative: von Kreisler, Alek, Dipl.-Chem. et al,
Deichmannhaus am Hauptbahnhof
D-5000 Köln 1(DE)


(54) **PARAHYDROXYBENZOATE COMPOUND.**


(57) Benzyl p-(p-hydroxybenzoyloxy) benzoate which is suitable for use as an insect pest repellent and a bactericide for, for example, industrial use.


EP 0 169 246 A1

TITLE MODIFIED
see front page

S P E C I F I C A T I O N

# PARA-HYDROXYBENZOATE

## TECHNICAL FIELD AND DISCLOSURE OF THE INVENTION

This invention relates to novel benzyl p-(p-hydroxybenzoyloxy)benzoate represented by the formula:

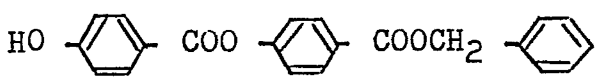

(I)

The compound of formula (I) of this invention can be prepared, for example, by allowing to react p-acetoxybenzoyl chloride and benzyl p-hydroxybenzoate under heating in a suitable solvent in the presence of an amine to obtain benzyl p-(p-acetoxybenzoyloxy)benzoate and hydrolyzing it in the usual way.

The objective compound can be purified by a conventional process such as column chromatography, recrystallization, etc.

The compound of this invention has a repellency action to unhygienic pests, e.g. cockroach, termite, etc. and a germicidal action. Hence, this compound is useful as a pest-repellent and a germicide, particularly industrial germicide.

In using the compound of this invention as a pest repellent, the compound mixed with a usual carrier for pest repellents is kneaded in a material from which repellency of unhygienic pests is intended, such as synthetic plastics, e.g. polyvinyl chloride, coated on such material with a brush, spray, etc., or impregnated in it. On the other hand, in using the compound of this invention as a germicide, the compound mixed with a usual carrier for germicides is used, for example, as a hand disinfectant, an antiseptic coating in which the compound is

incorporated, etc.

The amount in which the compound of this invention can be used may vary depending on the mode of use, and is such an amount that allows it to exhibit repellency action to unhygienic pests and germicidal action. For instance, the compound may be compounded, based on one part by weight of a carrier, usually in an amount of 0.5 - 10 parts by weight for a pest repellent and in an amount of 0.01 - 5 parts by weight for a germicide.

Example 1

Into a 200 ml four-neck flask equipped with a cooling tube and thermometer are charged 36 g of p-acetoxybenzoic acid and 1.4 g of thionyl chloride to make them react at 50$^{o}$C for 4 hours. Excess thionyl chloride is distilled off under reduced pressure to result in p-acetoxybenzoyl chloride. Thereafter, 45.7 g of benzyl p-hydroxybenzoate, 20.2 g of triethylamine and 100 ml of toluene are similarly charged into 300 ml four-neck flask equipped with a cooling pipe, thermometer and dropping funnel. The mixture is raised to 30$^{o}$C and a solution of 39.7 g of p-acetoxybenzoyl chloride in 50 g of toluene is dropped into the mixture over a period of 1 hour and subsequently, the resulting mixture is allowed to react at 50$^{o}$C for 30 minutes. After cooling, the reaction solution is washed with 50 ml of water three times and the solvent is distilled off. The residue is recrystallized from methanol to obtain benzoyl p-(p-acetoxybenzoyloxy)benzoate.

Then, 15.6 g of benzyl p-(p-acetoxybenzoyloxy)benzoate, 30 g of 5 % sodium hydroxide and 50 ml of tetrahydrofuran are likewise charged into a 100 ml four-neck flask equipped with a

cooling tube and thermometer and allowed to react at 30°C for 5 hours. The reaction product is extracted with toluene and washed with water, and the toluene is distilled off. The residue is separated by column chromatography to give benzyl p-(p-hydroxybenzoyloxy)benzoate as white crystals melting at 137 - 138.5°C.

Experimental Example 1

The compound of this invention is dissolved in methanol to prepare a 10,000 ppm solution. A rectangle filter paper of 12 x 9 cm in size is impregnated with 1 ml of the solution, air-dried, and attached to a veneer shelter having 12 x 9 cm bottom size and 1 cm height on its inner bottom.

Another shelter is likewise attached with a filter paper impregnated with 1 ml of methanol.

Respective shelters are placed in a plastic container and 200 German cockroaches are released in it. After standing overnight, number of them dwelling in each of the shelters is counted, and repellency rate (%) is computed by the equation:

$$\text{Repellency rate (\%)} = \frac{\left(\text{Number in non-treated shelter}\right) - \left(\text{Number in treated shelter}\right)}{\left(\text{Number in non-treated shelter}\right)}$$

The results obtained are shown in Table 1.

Table 1

| Concentration of the compound of the invention (ppm) | Addition amount (ml) | Repellency rate (%) | | | |
|---|---|---|---|---|---|
| | | 1st | 2nd | 3rd | Average |
| 10,000 | 1 | 90.9 | 86.4 | 91.4 | 89.6 |

Experimental Example 2

Antibacterial activity of the compound of this invention is measured in terms of minimum growth inhibitory concentration (MIC µg/ml) by agar dilution method.

The compound of this invention is mixed and diluted with nutrient agar medium to adjust it to a required concentration.

Then, a solution of staphylococcus aureus FDA 209 P or bacillus subtilis PCI 219 is inoculated on the agar medium obtained above and cultivated at 37°C for 24 hours. The results of minimum growth inhibitory concentration are shown in Table 2.

Table 2

| Test bacteria | Minimum growth inhibitory concentration (MIC µg/ml) |
|---|---|
| Staphylococcus aureus FDA 209P | 3.2 |
| Bacillus subtilis PCI 219 | 1.6 |

Experimental Example 3

The compound of this invention is dissolved in toluene to prepare a 50 % toluene solution. The solution is added to 100 parts of an alkyd-modified polyvinyl acetate exterior paint in an amount of 1 - 10 parts and the mixture is heated at 50°C for 7 days in an aqueous buffer solution of pH 9.2. As a result, there occurred no change such as septicity.

This invention has been fully described in the description and examples included therein, but may be varied or modified in various ways without departing from the spirit and scope of the invention.

0169246

CLAIM

1. Benzyl p-(p-hydroxybenzoyloxy)benzoate.

# INTERNATIONAL SEARCH REPORT

**0169246**

International Application No. PCT/JP85/00021

**I. CLASSIFICATION OF SUBJECT MATTER** (if several classification symbols apply, indicate all) [3]

According to International Patent Classification (IPC) or to both National Classification and IPC

Int. Cl$^4$ C07C 69/90, A01N 37/40 .

**II. FIELDS SEARCHED**

Minimum Documentation Searched [4]

| Classification System | Classification Symbols |
|---|---|
| IPC | C07C 69/90, A01N 37/40 |

Documentation Searched other than Minimum Documentation
to the Extent that such Documents are Included in the Fields Searched [5]

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| X | JP, A2, 58-61150 (Bayer A.G.)<br>12 April 1983 (12. 04. 83) P 392 Table 1<br>Example 28 and P 391 Example 1a, 1b &<br>EP, A2, 75173 & DE, A1, 3137298 | 1 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| April 8, 1985 (08. 04. 85) | April 15, 1985 (15. 04. 85) |
| **International Searching Authority** [1] | **Signature of Authorized Officer** [20] |
| Japanese Patent Office | |